Europäisches Patentamt

European Patent Office

Office européen des brevets

(19)

(11) Veröffentlichungsnummer: **0 102 502**
**A1**

# (12) EUROPÄISCHE PATENTANMELDUNG

(21) Anmeldenummer: 83107268.1

(22) Anmeldetag: 25.07.83

(51) Int. Cl.³: **C 08 L 29/14**
C 08 K 5/52, C 08 K 5/13
C 08 J 5/18

(30) Priorität: 28.07.82 DE 3228076

(43) Veröffentlichungstag der Anmeldung:
14.03.84 Patentblatt 84/11

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Hermann, Hans Dieter, Dr.
Am Dachsbau 7
D-6232 Bad Soden am Taunus(DE)

(72) Erfinder: Fabian, Klaus
Drosselweg 11
D-6239 Kriftel(DE)

(72) Erfinder: Hutten, Ulrich Martin, Dr.
Philipp-Kremer-Strasse 35
D-6233 Kelkheim (Taunus(DE)

(54) Verfahren zur Herstellung eines Polyvinylbutyral-Formkörpers.

(57) Die Erfindung betrifft ein Verfahren zur Herstellung eines Polyvinylbutyral-Formkörpers durch Extrusion einer Formmasse die Polyvinylbutyral, Weichmacher, einen phenolischen Stabilisator und einen Triester der phosphorigen Säure enthält. Vor oder während der Extrusion werden dem Polymeren und/oder dem Weichmacher

A) 0,05 - 0,5 Gew.-% eines phenolischen Stabilisators und

B) 0,02 - 0,5 Gew.-% eines bei der Verarbeitung nicht flüchtigen Phosphorigsäuretriesters

zugesetzt, wobei die Summe A + B ≤ 0,6 Gew.-% ist und das Verhältnis A : B zwischen 90 : 10 und 20 : 80 liegt. Trotz der geringen Phosphitkonzentration ist der Effekt der Farbaufhellung bzw. Verfärbungsverminderung bei extrudierten Formkörpern wie z. B. Folien selbst bei Extrusionstemperaturen von 200°C und mehr noch sehr deutlich.

EP 0 102 502 A1

Verfahren zur Herstellung eines Polyvinylbutyral-Formkörpers

Gegenstand der Erfindung sind Verfahren zur Herstellung von Polyvinylbutyral-Extrusionsformkörpern, sowie die danach erhaltenen Artikel, z.B. Folien.

Weichmacherhaltiges Polyvinylbutyral wird in großem Umfang zu Folien extrudiert, die als Zwischenschicht für splittersicheres Verbundglas verwendet werden. Sie zeichnen sich durch hervorragende mechanische und optische Eigenschaften aus.

Ein Nachteil des Polyvinylbutyrals ist seine im Vergleich zu anderen Polymeren hohe Oxydationsempfindlichkeit und seine Unbeständigkeit gegenüber Säuren. Zweckmäßigerweise wird Polyvinylbutyral daher vor oder während der Verarbeitung durch Zugabe von Antioxydantien, vorwiegend Phenolen, stabilisiert und außerdem zur Verhinderung einer sauren Hydrolyse mit einer geringen Menge an Alkali versetzt.

Folien aus Polyvinylbutyral weisen häufig eine zu hohe Haftung an Glas auf. Um diese Haftfähigkeit herabzusetzen, werden dem Polyvinylbutyral alkalisch reagierende Salze, wie Kaliumacetat, zugesetzt.

Durch die vorstehend beschriebenen Maßnahmen wird die Stabilität und Verarbeitbarkeit des Polymeren erheblich verbessert. Gleichzeitig nimmt jedoch auch die Tendenz zur Verfärbung des weichgemachten Polymeren zu.

Es sind bereits verschiedene Maßnahmen bekannt, welche diese Verfärbung vermindern sollen. So wird z.B. in der US-PS 3 823 113 eine zusätzliche Stabilisierung durch ein Benzotriazolderivat beschrieben, nach der Lehre der DE-OS 2 636 336 soll eine Puffersubstanz die Gelbfärbung des Polymeren vermindern. Die durch diese beiden Verfahren erreichbare Verbesserung ist jedoch begrenzt. Wesentlich wirkungsvoller ist die Stabilisierung von weichmacherhaltigem Polyvinylbutyral durch ein Gemisch aus phenolischem Antioxydans und Triestern der phosphorigen Säure, die Gegenstand der DE-PS 2 208 167 ist. Die nach der Lehre dieses Patents zu verwendende Menge an Phosphit ist jedoch verhältnismäßig hoch. Das kann bei der Verarbeitung zu einem unerwünschten Verbrauch von Alkali im Polymeren führen.

Überraschenderweise wurde nun gefunden, daß man bei der Extrusion von Polyvinylbutyralformmassen, die Weichmacher, ein phenolisches Antioxydans und Phosphit enthalten, außerordentlich lichtstabile Artikel wie z.B. Folien erhält, wenn das Phosphit in Mengen eingesetzt wird, die wesentlich geringer sind als die in der DE-PS 2 208 167 angegebenen. Phosphorigsäuretriester in den in dieser Patentschrift beschriebenen und beanspruchten Mengen zu verwenden, ist zwar bei der Verarbeitung in einem Kneter oder auf einem Kalander notwendig, sie ist jedoch nicht erforderlich, wenn die Polyvinylbutyralformmassen extrudiert werden sollen.

Die Erfindung betrifft somit ein Verfahren zur Herstellung eines Polyvinylbutyral-Formkörpers durch Extrusion einer Formmasse die Polyvinylbutyral, Weichmacher, einen phenolischen Stabilisator und einen Triester der phosphorigen Säure enthält, und die dadurch gekennzeichnet ist, daß vor oder während der Extrusion dem Polymeren und/oder dem Weichmacher

A) 0,05 - 0,5 Gew.-% eines phenolischen Stabilisators
und

B) 0,02 - 0,5 Gew.-% eines bei der Verarbeitung nicht
flüchtigen Phosphorigsäuretriesters

zugesetzt werden, wobei die Summe A + B $\leq$ 0,6 Gew.-% ist
und das Verhältnis A : B zwischen 90 : 10 und 20 : 80
liegt.

Es ist besonders überraschend, daß der Effekt der Farbaufhellung noch bei Extrusionstemperaturen von über
200°C zu erkennen ist, da bei der Verarbeitung z.B. in
einem Kneter schon bei 150°C zur Erzielung des gleichen
Effekts wesentlich höhere Phosphitkonzentrationen erforderlich sind.

Erfindungsgemäß sind prinzipiell alle Phenole geeignet,
die zur Stabilisierung von Polymeren verwendet werden.
Solche Phenole werden beispielsweise in K. Thinius,
Stabilisierung und Alterung von Plastwerkstoffen, Verlag
Chemie, 1969, Seiten 268 - 279, beschrieben. Eine Liste
von Handelsprodukten findet sich in Modern Plastics
Encyclopedia 1981 - 1982, Seiten 685 - 686. Sehr gut geeignet sind insbesondere die in o- und p-Stellung zur
OH-Gruppe substituierten Phenole sowie die in der DE-PS
22 08 167 angeführten Phenole.

Als Beispiele für besonders wichtige Phenole seien genannt:
2,2-Methylen-bis-4-methyl-6-tert.butyl-phenol, 2,6-Di-
tert.butyl-4-alkyl-phenol (Alkyl von 1 - 10 Kohlenstoffatomen), Terpenphenole wie Isobornylxylenol sowie
1-Hydroxy-2,6-ditert.butylphenyl-4-(3-propionsäurealkyl-
ester) (Alkyl von 1 - 18 Kohlenstoffatomen).

Die erfindungsgemäß zu verwendenden Triester der phosphorigen Säure sind ebenfalls aus der Literatur bekannt. Sie dürfen bei einer Temperatur von 150°C, vorzugsweise von 180°C, nicht flüchtig sein. Solche Phosphite sind in der oben angeführten Literaturstelle von Thinius auf Seiten 517 - 530 beschrieben.

So sind beispielsweise geeignet: Trialkylphosphite (Alkyl von 4 - 18 Kohlenstoffatomen), Triarylphosphite wie Triphenylphosphit und Trisnonylphenylphosphit, Alkylarylphosphite wie Diphenyloctylphosphit, Diphenyldecylphosphit und Phenyldidecylphosphit, ferner Triester der phosphorigen Säure aus mehrwertigen Alkoholen wie Ethylenglykol, Trimethylolpropan, Pentaerythrit, Bisphenol A und Neopentylglykol, wie sie beispielsweise in der DE-PS 22 08 167 angeführt sind.

Von Vorteil ist es, wenn die erfindungsgemäß zu verwendenden Phosphite möglichst hydrolysebeständig sind. Gut geeignet sind in dieser Hinsicht Trialkylphosphite mit Alkyl von 10 - 18 Kohlenstoffatomen sowie Trisnonylphenylphosphit.

Die Konzentration der erfindungsgemäß eingesetzten Phenole liegt zwischen 0,05 - 0,5 Gew.-%, vorzugsweise zwischen 0,1 und 0,4 Gew.-%, bezogen auf das Polymer/Weichmacher-Gemisch, die der Phosphite zwischen 0,02 und 0,5 Gew.-%, vorzugsweise zwischen 0,05 und 0,3 Gew.-%. Beide Komponenten sollten in einer Gesamtmenge von nicht mehr als 0,6 Gew.-%, bezogen auf das Polymer/Weichmacher-Gemisch eingesetzt werden. Höhere Konzentrationen führen bei Phenolüberschuß zu Verfärbungen, bei Phosphitüberschuß zum Verbrauch alkalischer Beimischungen im Polymeren.

Die Mengenverhältnisse Phenol/Phosphit können zwischen 90 : 10, vorzugsweise 85 : 15, und 20 : 80 liegen. Überraschenderweise ist es jedoch vorteilhaft, nicht mehr als 50 Gew.-% Phosphit im Stabilisatorgemisch einzusetzen.

Die Stabilisatoren werden in bekannter Weise zum Polymer/ Weichmacher-Gemisch gegeben. Sie können mit dem Polymeren in Pulverform vor oder während der Extrusion vermischt werden oder in inerter Lösung, z.B. in einem aliphatischen Kohlenwasserstoff auf das Polymere aufgebracht werden. Vorteilhaft ist es, die Stabilisatoren im Weichmacher zu lösen. Oft kann es auch günstig sein, die Stabilisatoren schon vor oder während der Herstellung des Polymeren diesem zuzusetzen, d.h. vor oder während der Acetalisierung des Polyvinylalkohols zuzugeben.

Grundsätzlich lassen sich nach dem erfindungsgemäßen Verfahren alle weichgemachten Polyvinylbutyrale stabilisieren, die zur Herstellung von Verbundglasfolien verwendet werden können. Es sind dies Polymere mit einem Gehalt an Vinylalkoholeinheiten von 17 - 29 Gew.-%, vorzugsweise 19 - 23 Gew.-%. Die Viskosität der 5 Gew.-%igen Lösungen der Polymeren in Ethanol (gemessen nach DIN 53015 bei 23°C) liegt vorzugsweise im Bereich von 10 - 200 mPas, insbesondere von 50 - 100 mPas.

Prinzipiell können alle mit Polyvinylbutyral verträglichen Weichmacher oder Weichmachergemische verwendet werden. Eine Liste von handelsüblichen Weichmachern, die Angaben über die Verträglichkeit mit Polyvinylbutyral enthält, findet sich in Modern Plastics Encyclopedia 1981 - 1982 auf Seiten 710 - 719. Beispiele für besonders geeignete Weichmacher sind Diester von aliphatischen Diolen mit aliphatischen Carbonsäuren, insbesondere Diester des Di-, Tri- und Tetraethylenglykols mit aliphatischen Carbonsäuren mit 6 - 10 Kohlenstoffatomen, z.B. 2-Ethylbuttersäure und n-Heptansäure, ferner Diester von Dicarbonsäuren, wie Adipin-, Sebazin- oder Phthalsäure mit aliphatischen Alkoholen mit 4 - 8 Kohlenstoffatomen, wie Dihexyladipat, Dibutylphthalat oder Dihexylphthalat, ferner Phosphorsäureester, wie Trikresylphosphat oder Trioctylphosphat sowie Gemische aus verschiedenen dieser Weichmacher, z.B. aus Phthalsäure- und Adipinsäureestern.

Die Weichmacher werden in den üblichen Mengen eingesetzt, d.h. die Polymer/Weichmacher-Gemische können z.B. 20 - 50 Gew.-%, vorzugsweise 25 - 40 Gew.-% Weichmacher enthalten.

Die erfindungsgemäße Extrusions-Formmasse wird vor allem zu Folien verarbeitet. Vorzugsweise wird dabei die Mischung durch eine Breitschlitzdüse zu einer 0,2 - 2 mm starken Folie extrudiert. Die Extrusionstemperatur liegt im üblichen Bereich, z.B. zwischen 140°C und 230°C, kurzzeitig können auch höhere Temperaturen erreicht werden.

Die Formmasse kann die üblichen Zusätze enthalten, wie z.B. geringe Mengen an Alkali, z.B. 0,001 - 0,1 % Alkalihydroxid oder alkalisch reagierendes Alkalisalz, ferner die bekannten Antihaftmittel, z.B. Salze von Carbonsäuren, insbesondere Kalium- und Magnesiumsalze der Ameisensäure bzw. der Essigsäure oder Salze von Dicarbonsäuren, sowie Lecithin oder Betaine. Die Konzentration an diesen Antihaftmitteln liegt beispielsweise zwischen 0,001 und 0,2 Gew.-%. Weiterhin kann die Formmasse sonstige übliche Stabilisatoren, insbesondere Lichtstabilisatoren, wie Benzotriazolderivate, sowie Mittel zur Verminderung der Klebrigkeit, wie Montansäureester in Konzentrationen von beispielsweise 0,1 - 2 Gew.-% enthalten.

Die erfindungsgemäß hergestellte Extrusions-Formmasse und die daraus hergestellten Artikel zeichnen sich in erster Linie durch eine erheblich verringerte Verfärbung aus. Daneben stabilisiert die Kombination Phenol/Phosphit das Polymere bei der Verarbeitung wesentlich besser als Phenol allein; Phosphit allein wirkt überhaupt nicht stabilisierend. Dies wird deutlich, wenn man den Anstieg des Schmelzindex bei der Verarbeitung verfolgt. Diese Erscheinungen sind im Prinzip schon aus der DE-PS 22 08 167 bekannt. Gegenüber diesem Verfahren ergibt sich als Vorteil jedoch der verringerte Bedarf an Stabilisator und die wesentlich geringere Beeinflussung der Alkalität des Polymer/Weichmacher-Gemisches.

Der Erläuterung der Erfindung dienen die folgenden Beispiele:

## Beispiel 1

Ein zur Herstellung von Folien geeignetes Polyvinylbutyral enthält 21,0 Gew.-% Vinylalkoholeinheiten und hat in 5 %iger Lösung in Ethanol bei 23°C nach DIN 53015 eine Viskosität von 75 mPas. Nach Zusatz von Kaliumacetat durch Auftrocknen einer wäßrigen Lösung hat das Polymere einen Alkalititer von 225. Der Alkalititer (ml n/100 HCl pro 100 g Polymeres) wird bestimmt durch Titration mit n/100 Salzsäure gegen Bromphenolblau als Indikator.

Dieses Polymere wird mit 29 Gew.-% (bezogen auf Polymeres + Weichmacher) Triethylenglykol-bis-2-ethylbuttersäureester vermischt. Dabei enthält der Weichmacher 0,3 Gew.-% Isobornylxylenol sowie 0,2 Gew.-% Diphenyldecylphosphit, jeweils bezogen auf das Polymer/Weichmacher-Gemisch. Das Gemisch wird in einem Laborextruder zu einer Folie extru-

0102502

diert. Dabei wird der Extruder im Einzugsbereich auf 170°C, in der Mittelzone auf 250°C und im letzten Drittel auf 180°C geheizt. Die Massetemperatur der Polymer/Weichmacherschmelze erreicht dabei maximal 235°C

Nach der Extrusion ist der Alkalititer auf 210 (bezogen auf das Polymere) abgefallen. Das Polymere hat eine Farbzahl (gemäß DE-PS 22 08 167) von 5 und einem Schmelzindex $i_{10}$ bei 150°C unter 98,07 N (10 kp) Last nach DIN 53 753 von 6,2 g/10 min.

Vergleichsversuche 1,2

In Vergleichsversuchen wird dasselbe Polymer/Weichmachergemisch einmal in Abwesenheit von Phosphit und einmal mit 0,4 Gew.-% Diphenyldecylphosphit zusammen mit der oben angegebenen Phenolmenge in gleicher Weise wie oben beschrieben extrudiert. Dabei werden folgende Werte erhalten.

| Vergleich | Phoshit Gew.-% | Alkalititer | Farbzahl | Schmelzindex g/10 min |
|---|---|---|---|---|
| 1 | 0 | 215 | 7 | 8,6 |
| 2 | 0,4 | 160 | 4 | 6,0 |

Die Vergleichsversuche zeigen, daß in Abwesenheit von Phosphit die Verfärbung wesentlich stärker ist. In Gegenwart zu hoher Phosphitmengen ist zwar die Verfärbung noch geringer, der Alkalititer wird dabei aber sehr stark erniedrigt, was die Glashaftung des Polymeren in unerwünschter Weise erhöht.

Beispiel 2

Ein Polyvinylbutyral mit 20,8 Gew.-% Vinylalkoholeinheiten, einer Viskosität gemäß Beispiel 1 von 69 mPas und

0102502

- 9 -

einem Alkalititer von 21 wird mit 30 Gew.-% (bezogen auf
die Mischung) Triethylenglykoldi-n-heptanoat extrudiert,
wie in Beispiel 1 beschrieben. Dabei enthält das Gemisch
0,2 Gew.-% 2,6-Ditert.butyl-p-kresol und die in der
Tabelle angegebenen Mengen an Tris-nonylphenyl-phosphit.
Die erhaltenen Werte sind der Tabelle zu entnehmen.

| Beispiel | Phosphit<br>Gew.-% | Alkalititer | Farbzahl |
|---|---|---|---|
| 2 a | 0,1 | 19 | 3 |
| 2 b | 0,2 | 18 | 2,5 |
| Vergleich 3 | 0 | 19 | 5 |

Beispiel 3

Das in Beispiel 2 beschriebene Polymere wird durch Zusatz von Kaliumformiat auf Alkalititer 66 eingestellt.
Es wird nach Vermischen mit 28 Gew.-% (bezogen auf die
Mischung) eines Esters von Triethylenglykol mit einem
Gemisch aliphatischer $C_6$ - $C_9$-Carbonsäuren bei 200°C extrudiert. Dabei enthält das Polymer/Weichmacher-Gemisch
0,2 Gew.-% 2,6-Ditert.butyl-1-hydroxyphenyl-4-(3-propionsäure-n-octadecylester) sowie 0,15 Gew.-% Trilaurylphosphit. Die extrudierte Folie hat die Farbzahl 1,5 bei
einem Alkalititer (bezogen auf das Polymere) von 63.
Extrudiert man unter denselben Bedingungen das gleiche
Gemisch in Abwesenheit von Phosphit, so erhält man eine
Folie mit der Farbzahl 3 und demselben Alkalititer.

Beispiel 4

Ein Polyvinylbutyral mit 20,4 Gew.-% Vinylalkoholeinheiten und einer Viskosität gemäß Beispiel 1 von 71 mPas
wird dadurch hergestellt, daß man Polyvinylalkohol mit
n-Butyraldehyd in Gegenwart von jeweils 0,2 Gew.-%
2,6-Ditert.butyl-p-kresol und Trisnonylphenylphosphit
(bezogen auf das entstehende Polyvinylbutyral) umsetzt.

Dieses Polymere wird in Gegenwart von 33 Gew.-% (bezogen auf die Mischung) Weichmacher extrudiert, wobei sich der Weichmacher aus 1 Gew.-Teil Trioctylphosphat und 2 Gew.-Teilen Dioctylphthalat zusammensetzt. Die Extrusionstemperatur liegt bei 210°C. Man erhält eine Folie mit der Farbzahl 1,5. Ein in gleicher Weise verarbeitetes Polymeres derselben Zusammensetzung, welches kein Phosphit enthält, hat die Farbzahl 3,5.

Beispiel 5

Das in Beispiel 2 beschriebene Polymere wird in Gegenwart von 0,4 Gew.-% Isobornylxylenol (bezogen auf die Mischung) und Trisnonylphenylphosphit durch Extrusion wie in Beispiel 1 angegeben verarbeitet. Als Weichmacher werden 29 Gew.-% (bezogen auf die Mischung) Triethylenglykol-diheptanoat verwendet. Die bei unterschiedlichen Mengen Phosphit erhaltenen Farbzahlen und Schmelzindexwerte sind aus der folgenden Tabelle ersichtlich.

| Menge Phosphit % bez. Mischung | Farbzahl | Schmelzindex $i_{10}$ 105°C g/10 min. |
|---|---|---|
| 0 (Vergleich) | 4,5 | 6,6 |
| 0,05 | 4,0 | 6,4 |
| 0,1 | 3,0 | 5,8 |
| 0,2 | 2,5 | 5,4 |

Patentansprüche:

1. Verfahren zur Herstellung eines Polyvinylbutyral-Formkörpers durch Extrusion einer Formmasse, die Polyvinylbutyral, Weichmacher, phenolischen Stabilisator und Triester einer phosphorigen Säure enthält, dadurch gekennzeichnet, daß vor oder während der Extrusion dem Polymeren und/oder dem Weichmacher

    A) 0,05 - 0,5 Gew.-%, bezogen auf die Mischung Polymer/Weichmacher, eines phenolischen Stabilisators und

    B) 0,02 - 0,5 Gew.-%, bezogen auf die Mischung Polymer/Weichmacher, eines bei der Verarbeitung nicht flüchtigen Phosphorigsäuretriesters

zugesetzt werden, wobei die Summe A + B $\leq$ 0,6 Gew.-% ist und das Verhältnis A : B zwischen 90 : 10 und 20 : 80 liegt.

2. Folien, hergestellt nach dem Verfahren des Anspruchs 1.

0102502

Nummer der Anmeldung

## EUROPÄISCHER RECHERCHENBERICHT

Europäisches
Patentamt

EP 83 10 7268

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,X | DE-B-2 208 167 (HOECHST AG) <br> * Anspruch 1; Spalte 3, Zeilen 32-39 * | 1,2 | C 08 L 29/14 <br> C 08 K 5/52 <br> C 08 K 5/13 <br> C 08 J 5/18 |
| | --- | | |
| X | DE-A-2 702 661 (CIBA-GEIGY AG) <br> * Seite 10, Zeilen 3-4; Seite 10, Zeile 20 - Seite 11, Zeile 2; Seite 14, Zeilen 17-18 * | 1,2 | |
| | ----- | | |

RECHERCHIERTE
SACHGEBIETE (Int. Cl. ³)

C 08 J 5/18
C 08 K 5/00
C 08 L 29/14

Der vorliegende Recherchenbericht wurde für alle Patentansprüche erstellt.

| Recherchenort <br> BERLIN | Abschlußdatum der Recherche <br> 17-10-1983 | Prüfer <br> IDEZ C.G. |
|---|---|---|